# EUROPEAN PATENT APPLICATION

(11) **EP 1 892 220 A1**
(43) Date of publication of application: **27.02.2008**
(21) Application number: 07113023.1
(22) Date of filing: 24.07.2007
(51) Int. Cl.: C01G 53/04, H01M 4/32, H01M 4/52, H01M 6/06

(54) **Nickel hydroxide powder, nickel oxyhydroxide powder, method for producing these and alkaline dry battery**

(30) Priority: 23.08.2006 US 839433 P
(71) Applicant: MATSUSHITA ELECTRIC INDUSTRIAL CO., LTD., Osaka 571-8501 (JP)
(72) Inventor: Noya, Shigeto, c/o Matsushita Electric Industrial Co., Ltd., 7F Twin 21 OBP Panasonic Tower, 2-1-61, Shiromi, Chuo-ku, Osaka 540-6207 (JP); Kato, Susumu, c/o Matsushita Electric Industrial Co., Ltd., 7F Twin 21 OBP Panasonic Tower, 2-1-61, Shiromi, Chuo-ku, Osaka 540-6207 (JP); Okada, Tadaya, c/o Matsushita Electric Industrial Co., Ltd., 7F Twin 21 OBP Panasonic Tower, 2-1-61, Shiromi, Chuo-ku, Osaka 540-6207 (JP); Mushiga, Takashi, c/o Matsushita Electric Industrial Co., Ltd., 7F Twin 21 OBP Panasonic Tower, 2-1-61, Shiromi, Chuo-ku, Osaka 540-6207 (JP)
(74) Representative: TBK-Patent

(57) **Abstract**

In order to provide an alkaline dry battery having excellent heavy load discharge characteristics, suppressed polarization at the time of heavy load pulse discharge, and excellent heavy load discharge characteristics after high temperature storage, a nickel oxyhydroxide powder having a tap density of 2.1 to 2.7 g/cm³ and including non-spherical and sheet-like nickel oxyhydroxide particles is included in a positive electrode active material.

## Description

### FIELD OF THE INVENTION

The present invention relates to a nickel hydroxide powder, a nickel oxyhydroxide powder, a method for producing these and an alkaline dry battery.

### BACKGROUND OF THE INVENTION

Alkaline manganese dry batteries among alkaline dry batteries are of an inside-out type, which comprises a positive electrode case also serving as a positive electrode terminal, a cylindrical positive electrode material mixture (pellets) disposed in the positive electrode case such that it is in close contact with the positive electrode case, and a gelled negative electrode disposed via a separator in the central hollow portion at the center of the above-described positive electrode material mixture. With widespread use of digital equipment in recent years, the load power of equipment for which such batteries are used has been increased, and thus batteries excellent in heavy load discharge characteristics have been increasingly demanded.

In order to meet such a demand, for example, Japanese Patent Publication No. 3552194 proposes that alkaline dry batteries excellent in heavy load discharge characteristics be fabricated by mixing nickel oxyhydroxide as a positive electrode active material into the positive electrode material mixture. Such alkaline dry batteries including nickel oxyhydroxide have been in practical use in recent years, and are gaining popularity as a main power supply for digital equipment represented by digital cameras because they are particularly excellent in heavy load discharge characteristics compared with the conventional alkaline manganese dry batteries.

However, for example, in the digital cameras, heavy load power is instantaneously required depending on their various functions such as stroboscopic flash, optical lens zoom, display on a liquid crystal display portion and write of image data to a recording medium. In contrast, in the conventional alkaline dry batteries including nickel oxyhydroxide, nickel hydroxide to serve as an insulator is produced in association with discharge. Therefore, as the discharge proceeds, a case may occur where heavy load power cannot be supplied instantaneously.

Specifically, in the alkaline dry batteries including nickel oxyhydroxide, polarization at the time of heavy load pulse discharge proceeds increasingly in the final stage of discharge, compared with the conventional alkaline dry batteries and eventually heavy load power cannot be supplied instantaneously. And that heavy load power cannot be supplied instantaneously causes a trouble such that the power of the digital camera is suddenly shut down.

Moreover, alkaline dry batteries including nickel oxyhydroxide is inferior in heavy load discharge characteristics after high temperature storage to alkaline dry batteries not including nickel oxyhydroxide, because of increase in the resistance between the positive electrode case and the positive electrode material mixture, decrease in the amount of dischargeable positive electrode active material, and the like. As a solution to this, for example, Japanese Laid-Open Patent Publication No. 2002-75354 proposes that a solid solution of nickel oxyhydroxide containing zinc element be used or a zinc oxide be added into the positive electrode material mixture for the purpose of improving heavy load discharge characteristics after high temperature storage.

However, in alkaline dry batteries using the solid solution of nickel oxyhydroxide containing zinc element, since polarization at the time of heavy load pulse discharge tends to proceed increasingly, there has been a room for improvement with respect to the nickel oxyhydroxide itself.

In particular, since a nickel oxyhydroxide powder for use in an alkaline dry battery is obtained by oxidizing a nickel hydroxide powder as a base material, it is considered that the state of the nickel oxyhydroxide powder (crystallinity, structure, etc.) substantially reflects the state of the nickel hydroxide powder. However, there have been few attempts to optimize the state of the nickel oxyhydroxide powder by way of optimizing the state of the nickel hydroxide powder.

### BRIEF SUMMARY OF THE INVENTION

Accordingly, in view of the conventional problems above, the present invention firstly intends to provide a nickel hydroxide powder and a method for producing the same, the nickel hydroxide powder enabling more reliable production of a nickel oxyhydroxide powder that makes it possible to obtain an alkaline dry battery having excellent heavy load discharge characteristics, suppressed polarization at the time of heavy load pulse discharge and excellent heavy load discharge characteristics after high temperature storage.

Further, the present invention secondary intends to provide a nickel oxyhydroxide powder and a method for producing the same, the nickel oxyhydroxide powder making it possible to obtain an alkaline dry battery having an excellent heavy load discharge characteristics, suppressed polarization at the time of heavy load pulse discharge and excellent heavy load discharge characteristics after high temperature storage.

Furthermore, the present invention finally intends to provide an alkaline dry battery having an excellent heavy load discharge characteristics, suppressed polarization at the time of heavy load pulse discharge and excellent heavy load discharge characteristics after high temperature storage.

The present invention firstly provides a nickel hydroxide powder having a tap density of approximately 2.1 to 2.5 g/cm³ and including non-spherical and sheet-like nickel hydroxide particles.

Further, the present invention provides a method for producing the above-described nickel hydroxide powder of the present invention, and specifically, a method for producing a nickel hydroxide powder comprising the steps of:
obtaining a mixture by adding a nickel hydroxide powder including spherical nickel hydroxide particles into an aqueous sodium hydroxide solution;
aging the mixture;
cooling the mixture after aging to obtain a precipitate having a tap density of approximately 2.1 to 2.5 g/cm³ and including non-spherical and sheet-like nickel hydroxide particles; and
separating, water-washing and drying the precipitate to obtain a nickel hydroxide powder including the nickel hydroxide particles.

Moreover, the present invention secondary provides a nickel oxyhydroxide powder having a tap density of approximately 2.1 to 2.7 g/cm³ and including non-spherical and sheet-like nickel oxyhydroxide particles.

Furthermore, the present invention provides a method for producing the above-described nickel oxyhydroxide powder of the present invention, and specifically, a method for producing a nickel oxyhydroxide powder comprising the steps of:
obtaining a mixture by adding a nickel hydroxide powder including spherical nickel hydroxide particles into an aqueous sodium hydroxide solution;
aging the mixture;
cooling the mixture after aging to obtain a precipitate having a tap density of approximately 2.1 to 2.5 g/cm³ and including non-spherical and sheet-like nickel hydroxide particles;
separating, water-washing and drying the precipitate to obtain a nickel hydroxide powder including the nickel hydroxide particles; and
oxidizing the nickel hydroxide powder to obtain a nickel oxyhydroxide powder having a tap density of approximately 2.1 to 2.7 g/cm³ and including non-spherical and sheet-like nickel oxyhydroxide particles.

Further, the present invention thirdly provides an alkaline dry battery comprising:
a positive electrode including a positive electrode active material containing at least nickel oxyhydroxide and manganese dioxide, and a conductive agent containing graphite;
a negative electrode including a negative electrode active material containing zinc or a zinc alloy;
a separator interposed between the positive electrode and the negative electrode;
a negative electrode current collector disposed in the negative electrode; and
an alkaline electrolyte,
wherein the nickel oxyhydroxide has a tap density of
approximately 2.1 to 2.7 g/cm³ and includes non-spherical and sheet-like nickel oxyhydroxide particles.

According to various measurement results obtained by the inventors of present invention, the nickel oxyhydroxide powder of the present invention obtained by the above-described method for producing a nickel oxyhydroxide powder of the present invention, unlike the conventional nickel oxyhydroxide powder, has a tap density of 2.1 to 2.7 g/cm³ and includes non-spherical and sheet-like nickel oxyhydroxide particles. The nickel oxyhydroxide particles are crystalline particles of nickel oxyhydroxide having a layered structure developed in the c-axis direction.

Therefore, the use of the nickel oxyhydroxide powder of the present invention for a positive electrode active material of alkaline dry batteries makes it possible to obtain an alkaline dry battery having: significantly improved electron conductivity, proton conductivity, various discharge characteristics, storage characteristics and filled density; excellent heavy load discharge characteristics; suppressed polarization at the time of heavy load pulse discharge; and excellent heavy load discharge characteristics after high temperature storage.

Herein, the weight ratio of the nickel oxyhydroxide and the manganese dioxide contained in the positive electrode is preferably approximately 10:90 to 80:20. With this weight ratio, the heavy load pulse characteristics are improved and a rise in battery temperature in the event of short circuiting in the battery is sufficiently suppressed.

According to the present invention, it is possible to provide a nickel hydroxide powder and a method for producing the same, the nickel hydroxide powder enabling more reliable production of a nickel oxyhydroxide powder that makes it possible to obtain an alkaline dry battery having excellent heavy load discharge characteristics, suppressed polarization at the time of heavy load pulse discharge and excellent heavy load discharge characteristics after high temperature storage.

Further, according to the present invention, it is possible to provide a nickel oxyhydroxide powder and a method for producing the same, the nickel oxyhydroxide powder making it possible to obtain an alkaline dry battery having an excellent heavy load discharge characteristics, suppressed polarization at the time of heavy load pulse discharge and excellent heavy load discharge characteristics after high temperature storage.

Furthermore, according to the present invention, it is possible to provide an alkaline dry battery having excellent heavy load discharge characteristics, suppressed polarization at the time of heavy load pulse discharge and excellent heavy load discharge characteristics after high temperature storage.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a front view of an alkaline dry battery according to an embodiment of the present invention, with a portion thereof shown in cross section.
FIG. 2 is an SEM image of a nickel hydroxide powder fabricated in Comparative Example 1.
FIG. 3 is an SEM image of a nickel hydroxide powder fabricated in Example 1.
FIG. 4 is an SEM image of a nickel hydroxide powder fabricated in Comparative Example 2.
FIG. 5 is an XRD chart of the nickel hydroxide powder fabricated in Comparative Example 1.
FIG. 6 is an XRD chart of the nickel hydroxide powder fabricated in Example 1.
FIG. 7 is an XRD chart of the nickel hydroxide powder fabricated in Comparative Example 2.

### DETAILED DESCRIPTION OF THE INVENTION

### [1-1] Nickel hydroxide powder

The nickel hydroxide powder of the present invention has a tap density of approximately 2.1 to 2.5 g/cm³ and includes non-spherical and sheet-like nickel hydroxide particles.

The "tap density" in the present invention refers to a bulk density, which generally serves as a reference for achieving high density filling. When nickel hydroxide having a high bulk density (tap density) and being composed of β-type crystals causes oxidation in the powder, a nickel oxyhydroxide powder composed of β-type crystals is produced. For this reason, the nickel hydroxide powder in the present invention is preferably composed of β-type crystals.

The tap density may be measured in compliance with the method specified in JIS-K5101 using "TAP DENSER KYT-3000" manufactured by SEISHIN ENTERPRISE Co., Ltd. (this applies hereinafter).

Herein, the nickel hydroxide particles contained in the nickel hydroxide powder in the present invention are crystalline particles having a laminated structure grown in the direction of c-axis. Specifically, according to an X-ray diffraction measurement of the nickel hydroxide powder of the present invention, the ratio I₀₀₁/I₁₀₀ of a diffraction peak intensity I₀₀₁ attributed to (001) plane to a diffraction peak intensity I₁₀₀ attributed to (100) plane is high, the orientation in the direction of c-axis is high, the half-width FWHM₀₀₁ of a diffraction peak attributed to (001) plane and the half-width FWHM₁₀₀ of a diffraction peak attributed to (100) plane are small, and secondary particles (crystals) including significantly grown primary particles (crystallites) are formed.

Specifically, the nickel hydroxide powder of the present invention preferably satisfies the following requirements:
(1) I₀₀₁/I₁₀₀ ≧ approximately 3.00, preferably I₁₀₀/I₁₀₀ ≧ approximately 3.20
(2) FWHM₀₀₁ ≦ approximately 0 . 300 , preferably FWHM₀₀₁ ≦ approximately 0.290
(3) FWHM₁₀₀ ≦ approximately 0.230, preferably FWHM₁₀₀ ≦ approximately 0.220

In the nickel hydroxide powder of the present invention, the nickel hydroxide may be a solid solution of nickel hydroxide containing an additional element M such as manganese (Mn), zinc (Zn), cobalt (Co) or magnesium (Mg).

### [1-2] Method for producing a nickel hydroxide powder

The above-described nickel hydroxide powder of the present invention may be fabricated by the steps of:
obtaining a mixture by adding a nickel hydroxide powder including spherical nickel hydroxide particles into an aqueous sodium hydroxide solution;
aging the mixture;
cooling the mixture after aging to obtain a precipitate having a tap density of approximately 2.1 to 2.5 g/cm³ and including non-spherical and sheet-like nickel hydroxide particles; and
separating, water-washing and drying the precipitate to obtain a nickel hydroxide powder including the nickel hydroxide particles.

(1) First, in the first step, a mixture is obtained by adding a nickel hydroxide powder including spherical nickel hydroxide particles into an aqueous sodium hydroxide solution.
   As the nickel hydroxide powder including spherical nickel hydroxide particles, a commercially available one may be used or a one obtained in an ordinary manner may be used. For example, it is obtained by mixing an aqueous nickel sulfate solution, an aqueous sodium hydroxide solution, and an aqueous ammonium solution, and then heating the mixture. This is followed by sampling the precipitate from the suspension, washing the sampled precipitate with an aqueous sodium hydroxide solution and water, and then drying.
   In the nickel hydroxide powder of the present invention, when the nickel hydroxide is a solid solution of nickel hydroxide including the above-described additional element M, a source of the additional element M may be mixed together. For example, when the additional element M is manganese, an aqueous manganese sulfate solution may be added; and when the additional element M is cobalt, an aqueous cobalt sulfate solution may be added.
   The aqueous sodium hydroxide solution to be used herein may be with various concentrations. For example, a 35 to 50 wt% aqueous sodium hydroxide solution may be used.
   The mixing ratio of the nickel hydroxide powder including spherical nickel hydroxide particles and the aqueous sodium hydroxide solution may be set at various ranges. For example, into one liter of aqueous sodium hydroxide solution, 100 to 250 g of nickel hydroxide powder including spherical nickel hydroxide particles may be added.
(2) Next, the mixture obtained in the manner as described above is subjected to aging.
   In this step, the mixture of a nickel hydroxide powder including spherical nickel hydroxide particles and an aqueous sodium hydroxide solution is aged to allow the crystal structure of the nickel hydroxide particles to grow. Accordingly, the aging conditions (temperature, duration, etc.) are adjustable to any range as appropriate, as long as the nickel hydroxide powder of the present invention as described in (1) above can be obtained. For example, a preferred temperature is approximately 100 to 150°C and a preferred duration is approximately 1 to 2 days. Moreover, the aging is preferably carried out under a hermetic atmosphere.
(3) Next, the mixture after aging as described above is cooled to obtain a precipitate having a tap density of approximately 2.1 to 2.5 g/cm³ and including non-spherical and sheet-like nickel hydroxide particles.
   The cooling conditions are adjustable to any range as appropriate, as long as the nickel hydroxide powder of the present invention as described in (1) above can be obtained. In order not to impair the state such as crystallinity or structure of the nickel hydroxide particles obtained, for example, natural cooling until cooled to room temperature (letting stand until cooled) is preferred. As a matter of course, active cooling is possible as long as the effect of the present invention is not impaired.
(4) Lastly, the above-described precipitate is separated, water-washed and dried, whereby a nickel hydroxide powder of the present invention having a tap density of approximately 2.1 to 2.5 g/cm³ and including non-spherical and sheet-like nickel hydroxide particles is obtained. The step of separating, water-washing and drying may be performed in an ordinary manner.

In such a manner as described above, the nickel hydroxide powder of the present invention may be obtained.

### [2-1] Nickel oxyhydroxide powder

A nickel oxyhydroxide powder of the present invention has a tap density of approximately 2.1 to 2.7 g/cm³ and includes non-spherical and sheet-like nickel oxyhydroxide particles.

### [2-2] Method for producing a nickel oxyhydroxide powder

The above-described nickel oxyhydroxide powder of the present invention may be fabricated by the steps of:
obtaining a mixture by adding a nickel hydroxide powder including spherical nickel hydroxide particles into an aqueous sodium hydroxide solution;
aging the mixture;
cooling the mixture after aging to obtain a precipitate having a tap density of approximately 2.1 to 2.5 g/cm³ and including non-spherical and sheet-like nickel hydroxide particles;
separating, water-washing and drying the precipitate to obtain a nickel hydroxide powder including the nickel hydroxide particles; and
oxidizing the nickel hydroxide powder to obtain a nickel oxyhydroxide powder having a tap density of approximately 2.1 to 2.7 g/cm³ and including non-spherical and sheet-like nickel oxyhydroxide particles.

The steps until obtaining a nickel hydroxide powder having a tap density of approximately 2.1 to 2.5 g/cm³ and including non-spherical and sheet-like nickel hydroxide particles are the same as those in the method for producing a nickel hydroxide powder of the present invention as described in [1-2] above. Specifically, in the method for producing a nickel oxyhydroxide powder of the present invention, the nickel hydroxide powder obtained by the above-described method for producing a nickel hydroxide powder of the present invention is oxidized, whereby a nickel oxyhydroxide powder having a tap density of approximately 2.1 to 2.7 g/cm³ and including non-spherical and sheet-like nickel oxyhydroxide particles is obtained.

As a method of the oxidation, various methods having been widely used may be employed; however, in view of performing chemical oxidation more surely, preferred is a direct oxidation of the above-described nickel hydroxide powder of the present invention by way of adding an aqueous sodium hypochlorite solution or an aqueous potassium persulfate solution thereinto.

After the oxidation, water-washing and drying are performed in an ordinary manner, whereby a nickel oxyhydroxide powder having a tap density of approximately 2.1 to 2.7 g/cm³ and including non-spherical and sheet-like nickel oxyhydroxide particles is obtained.

### [3] Alkaline dry battery

An alkaline dry battery of the present invention has the same structure as that of the conventional alkaline dry battery except that the nickel oxyhydroxide powder of the present invention as described in [2-1] above as the positive electrode active material. Specifically, the alkaline dry battery of the present invention comprises:
a positive electrode including a positive electrode active material containing at least nickel oxyhydroxide and manganese dioxide, and a conductive agent containing graphite;
a negative electrode including a negative electrode active material containing zinc or a zinc alloy;
a separator interposed between the positive electrode and the negative electrode;
a negative electrode current collector disposed in the negative electrode; and
an alkaline electrolyte,
wherein the nickel oxyhydroxide has a tap density of approximately 2.1 to 2.7 g/cm³ and includes non-spherical and sheet-like nickel oxyhydroxide particles.

The weight ratio of the nickel oxyhydroxide and the manganese dioxide contained in the positive electrode is preferably in a range from approximately 10:90 to 80:20. With this weight ratio, the heavy load pulse characteristics are improved and a rise in battery temperature in the event of short circuiting in the battery is sufficiently suppressed. Moreover, by setting the mixing weight ratio of the nickel manganese dioxide and the nickel oxyhydroxide within in this range, gas generation during overdischarge is suppressed and excellent heavy load discharge characteristics due to the nickel oxyhydroxide is obtained. In addition, the mixing weight ratio of the manganese dioxide and the nickel oxyhydroxide is more preferably in a range from approximately 40:60 to 70:30 for the reason that the favorable heavy load discharge characteristics and the light load discharge characteristics are exerted in a well-balanced manner and low costs are achieved.

As for other components of the positive electrode, well-known materials may be used. For example, a positive electrode material mixture including nickel oxyhydroxide and manganese dioxide serving as the positive electrode active material, graphite serving as the conductive agent, and an electrolyte may be used as the positive electrode.

As for the negative electrode, the negative electrode current collector and the separator, well-known materials may be used. Usable as the negative electrode is, for example, a gelled negative electrode including sodium polyacrylate serving as a gelling agent, zinc powder or zinc alloy powder serving as the negative electrode active material, and an electrolyte. Further, usable as the separator is, for example, nonwoven fabric obtained by weaving polyvinyl alcohol fibers, rayon fibers, etc. together.

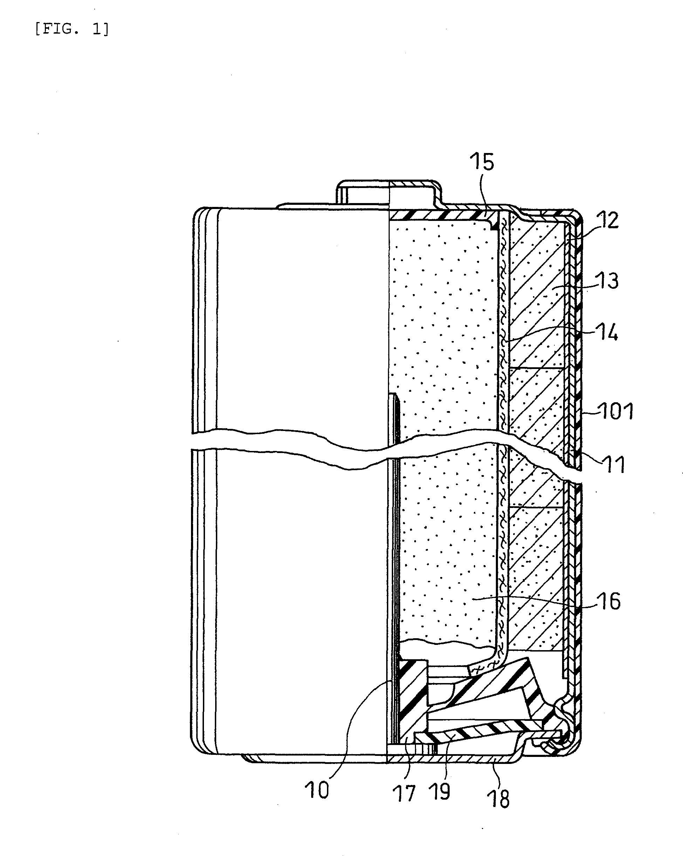

FIG. 1 shows a front view of an alkaline dry battery according to an embodiment of the present invention, with a portion thereof shown in cross section. This alkaline dry batteries comprises a battery case 11, a positive electrode material mixture 13, a gelled negative electrode 16, a separator 14 disposed between the positive electrode material mixture 13 and the gelled negative electrode 16, a gasket 17, a negative electrode current collector 10, a bottom plate 18, an outer label 101, a metal washer 19, a conductive coating film 12 and an insulating cap 15.

The alkaline dry battery shown in FIG. 1 may be fabricated in the manner as described below. Specifically, first, plural pieces of positive electrode material mixture 13 are inserted into the battery case 11. The positive electrode material mixture 13 is remolded with a pressing jig to be brought into close contact with the inner wall of the battery case 11. The separator 14 of a bottomed cylindrical shape is then placed at the center of the positive electrode material mixture 2 disposed in the battery case 11. Into the separator 14, a predetermined amount of electrolyte is injected. After the passage of a predetermined time, the gelled negative electrode 16 is charged into the separator 14. Subsequently, the negative electrode current collector 10 is inserted into the center of the gelled negative electrode 16. Herein, prior to this insertion, the negative electrode current collector 10 is integrated with the gasket 17 and the bottom plate 18 also serving as a negative electrode terminal. After the insertion, the opening end of the battery case 11 was caulked toward the rim of the bottom plate 18 via the end portion of the gasket 17, to hermetically seal the opening of the battery case 11. Finally, the outer surface of the battery case 11 is covered with the outer label 101, whereby an alkaline dry battery is obtained.

In the following, Experimental Examples including Examples and Comparative Examples of the present invention will be described.

### [Experimental Example 1: Fabrication of a nickel hydroxide powder]

### Comparative Example 1

A 2.5 mol/liter aqueous nickel sulfate solution, a 0.13 mol/liter aqueous manganese sulfate solution, a 0.05 mol/liter aqueous cobalt sulfate solution, a 5 mol/liter aqueous sodium hydroxide solution and a 5 mol/liter aqueous ammonia solution were prepared. These solutions were continuously supplied with a pump at a flow rate of 0.5 milliliter/min into a reaction apparatus provided with a stirring blade, the temperature in which is kept at 40°C. Subsequently, a suspension obtained by overflow was sampled when the pH in the reaction apparatus became constant and the balance between the metal salt concentration and the metal hydroxide particle concentration became constant, indicating that a steady state is obtained. Thereafter, a precipitate was separated by decantation. This precipitate was treated with an aqueous sodium hydroxide solution of pH 13 to 14 to remove anions such as sulfate ions in the metal hydroxide particles, and then water-washed and dried, whereby a spherical nickel hydroxide powder (No. 1) having a tap density of 2.1 g/cm³ was obtained.

### Example 1

Into one liter of 48 wt% aqueous sodium hydroxide solution, 100 g of the spherical nickel hydroxide powder obtained in the same manner as in the above-described Comparative Example 1 was added, then aged for two days in a Teflon container while the temperature was kept at 150°C, and cooled. Thereafter, a precipitate was separated, water-washed and then dried, whereby a nickel hydroxide powder (No. 2) having a tap density of 2.1 g/cm³ and including non-spherical and sheet-like particles was obtained.

### Comparative Example 2

Into a reaction apparatus provided with a stirring blade, a 100 g/liter of aqueous nickel nitrate solution was prepared. While the temperature of the aqueous solution was kept at 50°C, an aqueous solution obtained by dissolving 30.3 g of sodium hydroxide into 500 milliliters of water was gradually dropped (neutralized). After the completion of the dropping of the aqueous sodium hydroxide solution, the stirring was stopped. The mixture solution thus obtained was aged for one day while kept at a temperature of 50°C, and then cooled. Thereafter, a precipitate was separated, water-washed and then dried. The massive nickel hydroxide thus obtained was moderately pulverized, whereby an indefinite-shaped nickel hydroxide powder (No. 3) having a tap density of 1.6 g/cm³ was obtained.

### [Evaluation test]

### (1) SEM image

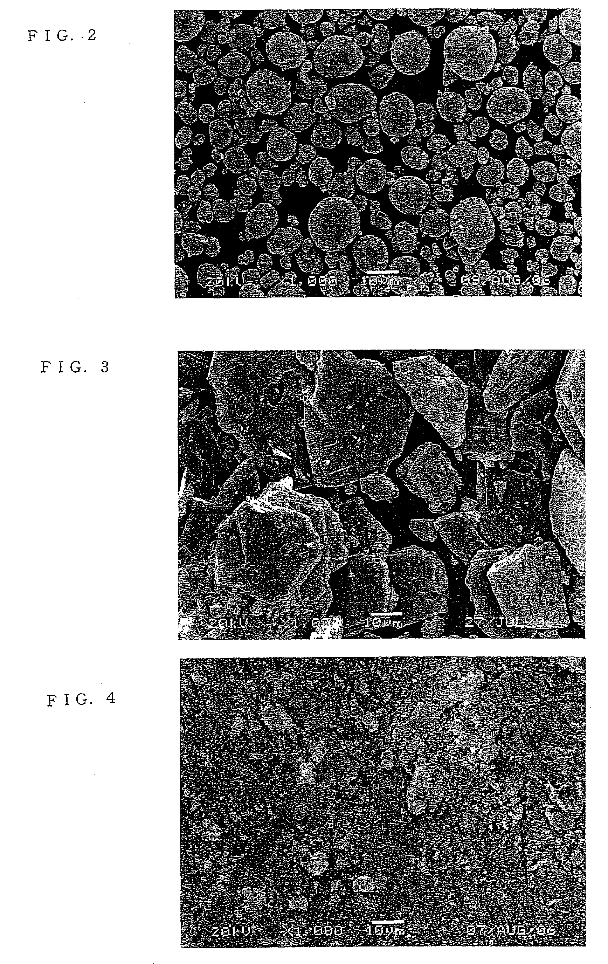

The shapes of the nickel hydroxide particles of the nickel hydroxide powders No. 1 to No. 3 obtained in the above-described Comparative Example 1, Example 1 and Comparative Example 2 were observed using a scanning electron microscope (SEM). FIGS. 2 to 4 show the SEM images thus obtained. FIG. 2 indicates that the nickel hydroxide particles of the nickel hydroxide powder of Comparative Example 1 are spherical or egg-shaped. FIG. 4 indicates that the nickel hydroxide particles of the nickel hydroxide powder of Comparative Example 2 are indefinite-shaped (non-spherical).

In contrast to these, FIG. 3 indicates that the nickel hydroxide particles of the nickel hydroxide powder of Example 1 are non-spherical and sheet-like.

### (2) Tap density

The tap densities of the nickel hydroxide powders No. 1 to No. 3 obtained in the above-described Comparative Example 1, Example 1 and Comparative Example 2 were measured in compliance with the method specified in JIS-K5101 using "TAP DENSER KYT-3000" manufactured by SEISHIN ENTERPRISE Co., Ltd. The results were 2.1 g/cm³ in Comparative Example 1, 2.1 g/cm³ in Example 1, and 1.6 g/cm³ in Comparative Example 2.

### (3) XRD measurement

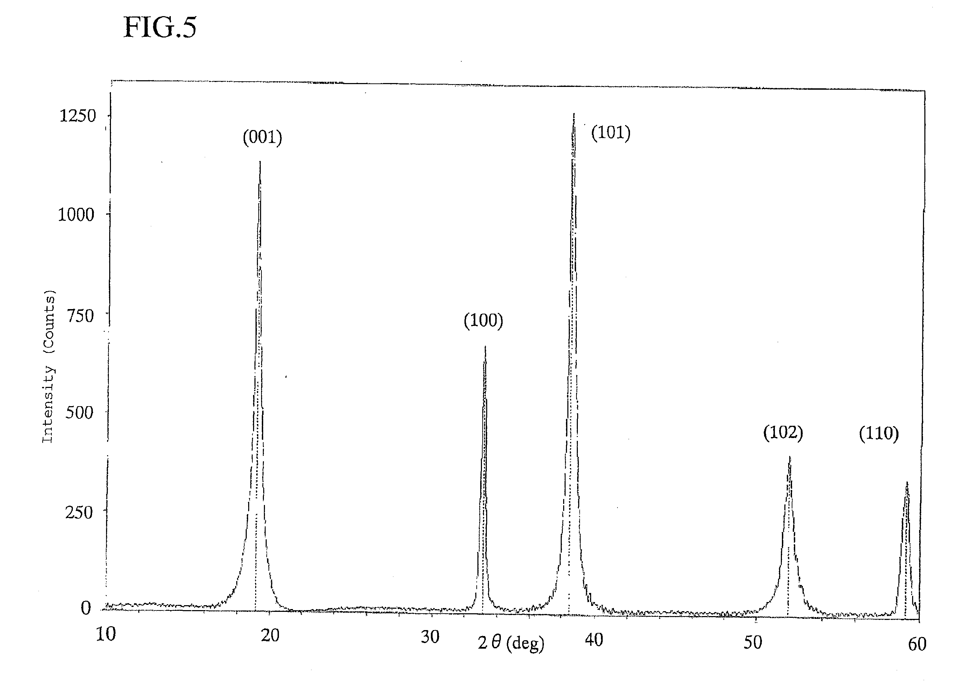

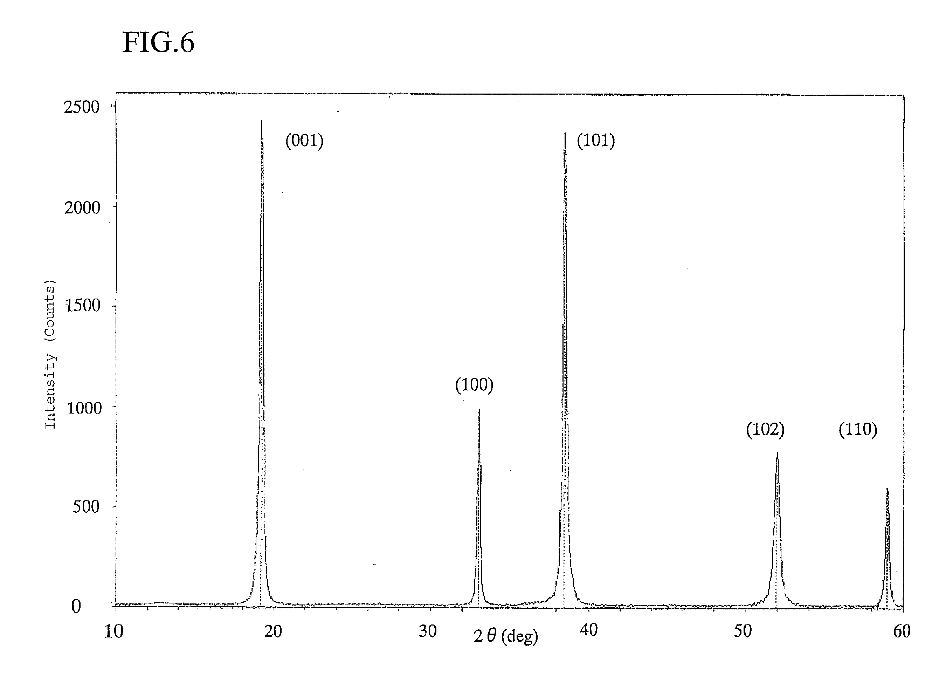

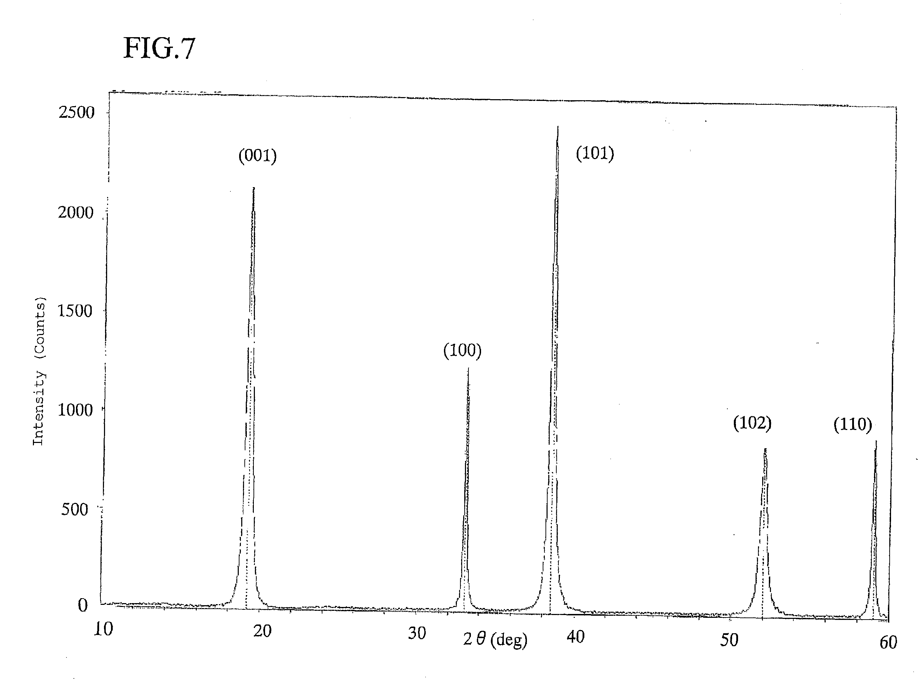

The crystalline structures of the nickel hydroxide powders No. 1 to No. 3 obtained in the above-described Comparative Example 1, Example 1 and Comparative Example 2 were measured by powder X-ray diffractometry. From the X-ray diffraction patterns thus obtained, integrated intensities and half-widths (FWHM) of diffraction peaks attributed to (001) plane, (100) plane, (101) plane and (102) plane of β-nickel hydroxide were determined by calculation, and integrated intensity ratios (I₀₀₁/I₁₀₀) of diffraction peak attributed to (001) plane to that attributed to (100) plane were determined. The results are shown in FIGS. 5 to 7. Moreover, the data obtained from these figures are shown in Table 1.

The conditions for measurement are shown below. Measuring apparatus: Powder X-ray diffractometry "RINT1400" manufactured by RIGAKU CORPORATION
Counter cathode: Cu
Filter: Ni
Tube voltage / tube current: 40 kV, 100 mA
Sampling angle: 0.02°
Scan rate: 3° /min
Divergence slit: 1/2°
Scattering slit: 1/2°
Scan range: 10° to 60°

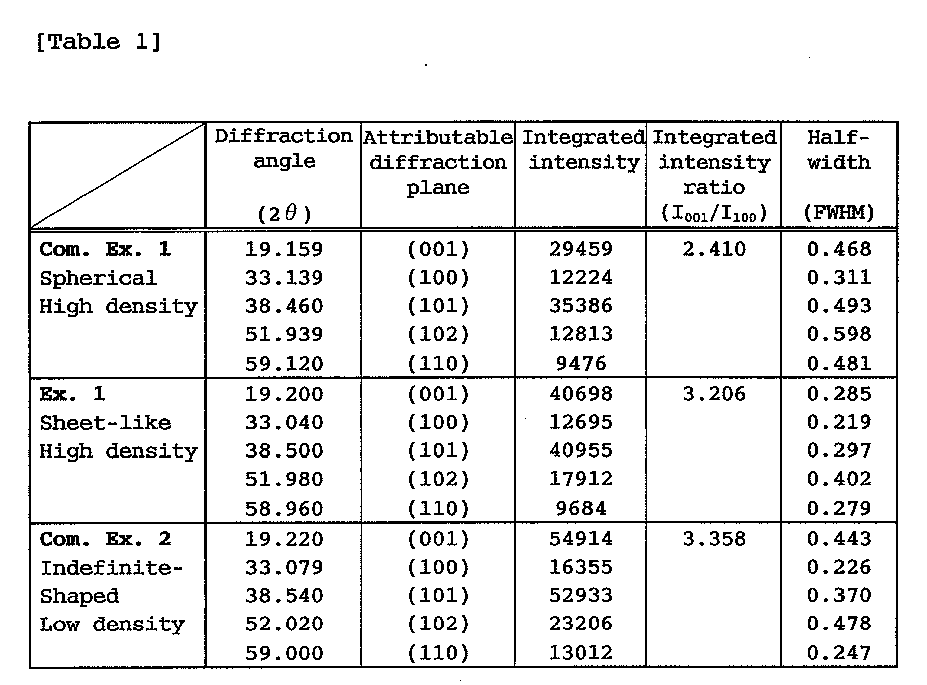

### [Experimental Example 2: Fabrication of a nickel oxyhydroxide powder]

### Comparative Example 3

Next, as a chemical oxidation treatment to the nickel hydroxide powder No. 1, the powder was immersed into a 0.5 mol/liter aqueous sodium hydroxide solution and an aqueous sodium hypochlorite solution (effective chlorine concentration: 12 wt%) in an amount corresponding to the oxidizing equivalent of 1.2 was added thereto. Subsequently, the mixture was stirred at a reaction atmospheric temperature of 45°C for three hours to yield a nickel oxyhydroxide powder (nickel oxyhydroxide powder No. 1). The powder thus obtained was water-washed sufficiently and then vacuum-dried at 60°C.

### Example 2

Next, a nickel oxyhydroxide powder (nickel oxyhydroxide powder No. 2) was fabricated in the same manner as in the above-described Comparative Example 3 except that the nickel hydroxide powder No. 2 was used.

### Comparative Example 4

Next, a nickel oxyhydroxide powder (nickel oxyhydroxide powder No. 3) was fabricated in the same manner as in the above-described Comparative Example 3 except that the nickel hydroxide powder No. 3 was used.

### [Evaluation Test]

With respect to the nickel oxyhydroxide powders No. 1 to No. 3 obtained in the above-described Comparative Example 3, Example 2 and Comparative Example 4, the SEM images and the tap densities were measured in the same manner as in the case of the above-described nickel hydroxide powders. The results found that powders having similar shapes to those in the case of the above-described nickel hydroxide powders were fabricated. However, the tap density of each powder was slightly larger than those in the case of the nickel hydroxide powders. There are hydrogen bonds between oxygen in the NiO₂ layers and hydrogen present between the layers in nickel hydroxide; however, in nickel oxyhydroxide, hydrogen are extracted due to oxidation. The tap density was increased presumably because the above-described hydrogen bonds were strengthened in nickel oxyhydroxide.

The nickel oxyhydroxide powder of the present invention is composed of crystalline particles of nickel oxyhydroxide having a layered structure developed in the c-axis direction, and being non-spherical and sheet-like. Therefore, the use of the nickel oxyhydroxide powder of the present invention as a positive electrode active material of alkaline dry batteries makes it possible to obtain an alkaline dry battery having: improved filled density, significantly improved electron conductivity, proton conductivity, various discharge characteristics, and storage characteristics; excellent heavy load discharge characteristics; suppressed polarization at the time of heavy load pulse discharge; and excellent heavy load discharge characteristics after high temperature storage.

According to the present invention, the pulse characteristics especially of a heavy load pulse discharge of alkaline dry batteries can be improved, and polarization at the time of pulse discharge can be suppressed. Therefore, the alkaline dry battery of the present invention is useful as a main power supply for digital equipment represented by digital cameras.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

In order to provide an alkaline dry battery having excellent heavy load discharge characteristics, suppressed polarization at the time of heavy load pulse discharge, and excellent heavy load discharge characteristics after high temperature storage, a nickel oxyhydroxide powder having a tap density of 2.1 to 2.7 g/cm³ and including non-spherical and sheet-like nickel oxyhydroxide particles is included in a positive electrode active material.

## Claims

1. A nickel hydroxide powder having a tap density of approximately 2.1 to 2.5 g/cm³ and including non-spherical and sheet-like nickel hydroxide particles.

2. A method for producing a nickel hydroxide powder comprising the steps of:
obtaining a mixture by adding a nickel hydroxide powder including spherical nickel hydroxide particles into an aqueous sodium hydroxide solution;
aging said mixture;
cooling said mixture after aging to obtain a precipitate having a tap density of approximately 2.1 to 2.5 g/cm³ and including non-spherical, and sheet-like nickel hydroxide particles; and
separating, water-washing and drying said precipitate to obtain a nickel hydroxide powder including said nickel hydroxide particles.

3. A nickel oxyhydroxide powder having a tap density of approximately 2.1 to 2.7 g/cm³ and including non-spherical and sheet-like nickel oxyhydroxide particles.

4. A method for producing a nickel oxyhydroxide powder comprising the steps of:
obtaining a mixture by adding a nickel hydroxide powder including spherical nickel hydroxide particles into an aqueous sodium hydroxide solution;
aging said mixture;
cooling said mixture after aging to obtain a precipitate having a tap density of approximately 2.1 to 2.5 g/cm³ and including non-spherical and sheet-like nickel hydroxide particles;
separating, water-washing and drying said precipitate to obtain a nickel hydroxide powder including said nickel hydroxide particles; and
oxidizing said nickel hydroxide powder to obtain a nickel oxyhydroxide powder having a tap density of approximately 2.1 to 2.7 g/cm³ and including non-spherical and sheet-like nickel oxyhydroxide particles.

5. An alkaline dry battery comprising:
a positive electrode including a positive electrode active material containing at least nickel oxyhydroxide and manganese dioxide, and a conductive agent containing graphite;
a negative electrode including a negative electrode active material containing zinc or a zinc alloy;
a separator interposed between said positive electrode and said negative electrode;
a negative electrode current collector disposed in said negative electrode; and
an alkaline electrolyte,
wherein said nickel oxyhydroxide has a tap density of approximately 2.1 to 2.7 g/cm³ and includes non-spherical and sheet-like nickel oxyhydroxide particles.
